# EUROPEAN PATENT SPECIFICATION

(11) **EP 1 726 539 B1**
(45) Date of publication and mention of the grant of the patent: **13.02.2008**
(21) Application number: 05077962.8
(22) Date of filing: 23.12.2005
(51) Int. Cl.: B65G 1/04, B66F 9/07

(54) **Apparatus and method for stocking bulky loads**
Vorrichtung und Verfahren zum Lagern von sperriger Last
Dispositif et méthode pour stocker des charges volumineuses

(30) Priority: 26.05.2005 IT RE20050061
(43) Date of publication of application: 29.11.2006
(73) Proprietor: Elettric 80 S.p.A., 42030 Viano, Reggio Emilia (IT)
(72) Inventor: Castegren, J.A.G. c/o Elettric 80 S.P.A., 42030 Viano (Reggio Emilia) (IT)
(74) Representative: Corradini, Corrado

(56) References cited:
- DE-A1- 2 348 793
- FR-A- 2 322 085
- US-A- 4 043 463
- US-A- 4 194 864
- US-A- 4 331 419

## Description

The present invention concerns an apparatus and a method for stocking bulky loads - for example palletised loads, packages or large individual objects - typically inside warehouses.

As known, to stock this type of loads numerous different methods are currently available, which generally have in common that they foresee the use of forklifts, typically driven by an on-board operator, to move the loads inside the warehouses.

One of such methods foresees that the loads be arranged one on top of the other to form piles, and that the piles be brought together in suitable storage areas defined inside the warehouses, which are separated by manoeuvring corridors for the forklifts.

This method undoubtedly possesses the advantages of great simplicity and great cost-effectiveness.

However, it is unsuitable for stocking fragile loads that, due to their characteristics, cannot be piled up without damaging them.

Moreover, since for reasons of structural stability it is not possible to make very high piles, such a method does not even allow the height of the warehouse to be fully exploited.

Finally, it does not allow efficient management of different types of products; indeed, since products of the same type may have to be arranged at the same height from the ground, they could not be managed flexibly independently of the products that lie above them.

To solve these problems, alternative methods foresee that the loads be arranged on suitable shelving, so that it is no longer necessary to pile them directly on top of each other, and that it also be possible, using suitably high shelving, to fully exploit the height of the warehouse.

A first type of known shelving is "front-access shelving", which comprises a series of superposed shelves, generally extending in the longitudinal horizontal direction, on which the loads are arranged through a movement in the transversal direction, carried out by the forklift that carries them.

Such shelving possesses the advantage of allowing the maximum flexibility in the management of the goods in stock, since it allows any load to be put down or picked up without the need to respect any order of precedence; however, it generally requires wide manoeuvring corridors for the forklifts, and therefore wide empty spaces that cannot be used.

A second type of known shelving is "shelving with roller conveyor", in which the individual juxtaposed shelves are slightly inclined in the longitudinal direction and are generally defined by a roller conveyor arranged transversally. In these types of shelving, the loads are loaded in the longitudinal direction from an end of each shelf to form long rows, and are picked up from the opposite end; thanks to the rollers, as the loads are picked up, the rows slide in the longitudinal direction on the shelves, freeing up space for new loads.

Such shelving possesses the advantage of being able to be placed close to analogous shelving without the need to foresee manoeuvring corridors for the forklifts, so as to obtain a high exploitation of the available space inside the warehouse; however, it means rather rigid management of the goods in stock, since the first load that is arranged on each shelf is necessarily also the first to be picked up (FIFO system).

Moreover, to be arranged on such shelving, the loads must be arranged on top of special pallets that ensure that it slides on the rollers, and they must be sufficiently stable so as not to risk falling or toppling due to the inclination of the shelves.

A third type of known shelving is "drive-in shelving", which is formed from a series of interfacing vertical walls that define storage corridors, able to be travelled along in the longitudinal direction by the forklifts. Each of said corridors is divided into a series of stacked shelves that extend for the entire longitudinal dimension, and that are each suitable for housing a row of loads in the longitudinal direction. Each shelf is defined by a pair of small coplanar brackets that respectively project from each of the vertical walls of the storage corridor, so that each load of the row rests on both of the brackets; said brackets being separated apart by a sufficient space to allow the passage of the forklifts, which enter and leave the storage corridor from the same access point, to put down or pick up the loads.

Such shelving substantially possesses the same advantages and the same disadvantages as the "shelving with roller conveyor", i.e. good exploitation of the spaces of the warehouse, since it eliminates the manoeuvring corridors for the forklifts, but at the same time, it involves a rather rigid management of the goods in stock. In particular, it does not allow every shelf to be loaded/unloaded independently; indeed, so that the forklift can arrive at a certain depth with respect to a given shelf it is necessary for all of the shelves below it to be free.

An apparatus for stocking bulky loads that overcomes many of said drawbacks and allows high exploitation of the available spaces inside the warehouse, and greater flexibility in the management of the good in stock is illustrated in US-A-4 194 864.

This apparatus comprises: storage shelving comprising at least one storage corridor with longitudinal horizontal extension that is divided into two series of support compartments, each of which extends like a free corridor for the entire longitudinal dimension and is suitable for autonomously supporting a row of loads in the longitudinal direction, where the compartments of each series are stacked above one another; and a lifting means suitable for moving in the longitudinal direction along said storage corridor, which comprises a support means with vertical extension, having a relatively small transversal size, which carries engagement means, arranged transversally on either side with respect to the support means, to raise/lower at least one load at a time , said support means being suitable for passing in an intermediate lane that separates the two series of support compartments from each other; said lifting means being suitable for moving the loads to slide in the longitudinal direction inside said support compartments, and for releasing them on them, away from the loads arranged in the opposite series of compartments so as to leave said intermediate lane free.

It is thus possible to best exploit the available spaces inside the warehouse, eliminating the manoeuvring lanes for the forklifts at the sides of the shelving and being able to reach substantially indefinite heights, and to allow greater flexibility in the management of the goods in stock.

However, in said shelving, the lifting means is constricted and supported in vertical position by a lower longitudinal rail and by an upper longitudinal rail, both arranged along the longitudinal vertical middle plane of the intermediate lane, on the floor and on the top covering wall of the shelving, respectively. Such a means is therefore able to move just inside the shelving and also each intermediate lane requires a suitable lifting means, dedicated to it.

Moreover, it is not only necessary to transfer the loads from whatever location to the end of the intermediate lane close to the lifting means, but it is also necessary to load or unload the loads onto/from its support means.

The purpose of the present invention is to overcome the aforementioned drawbacks of patent US-A-4 194 864 and of the illustrated prior art.

Such a purpose is accomplished by the invention as characterised in the claims.

Thanks to the invention, the lifting means that moves the loads inside the shelving is not constrained to it and can move the same loads with the maximum freedom even outside of the shelving like a conventional forklift.

Moreover, the same lifting means can serve many corridors of the shelving (or of other separate shelving units). Or, vice-versa, many lifting means can operate in the same corridor, even simultaneously.

Moreover, the lifting means is able to stack the loads one on top of the other in direct contact with each other.

The characteristics and advantages of the invention shall become clearer from reading the following description provided as a non-limiting example, with the help of the figures illustrated in the attached tables, in which:
- figure 1 is a partial schematic view, in front elevation, of the shelving and of the lifting means according to the invention;
- figure 2 is a partial view of the traced outline II-II indicated in figure 1;
- figure 3 is analogous to figure 2, shown during a loading step of the shelving;
- figure 4 is an enlarged detail of figure 1;
- figure 5 is a perspective view of the lifting means according to the invention shown in detail;
- figure 6 is a side view of the lifting means of figure 5;
- figure 7 is a plan view of the lifting means of figure 5.

The loads P that are stocked with the apparatus in question are generally bulky loads.

More specifically, each of said loads P can be formed from a group of discreet objects arranged neatly on a pallet P' (in such a case the pallet P' defines the lower base of the load P) or inside suitable packaging, or else it can simply be formed from a large individual object, also possibly palletised or packaged.

The apparatus for stocking the loads P, globally indicated with 1 in the figures, comprises storage shelving 2 and a mobile lifting means 3 at the floor, suitable for moving the loads P to arrange them on the storage shelving 2 and to pick them up from it. In this way, said apparatus 1 advantageously allows the loads P to be stocked up to a substantially indefinite height inside the warehouse, which depends solely upon the height of the storage shelving 2 and upon the constructive characteristics of the lifting means 3.

The storage shelving 2 comprises at least one storage corridor 20 that extends longitudinally in a horizontal direction, and that is divided into a plurality of support compartments 21.

Each of said support compartments 21 extends like a free corridor of small size generally for the entire longitudinal dimension of the storage corridor 20, and is suitable for autonomously housing and supporting a row made up of an indeterminate number of loads P aligned in the longitudinal direction.

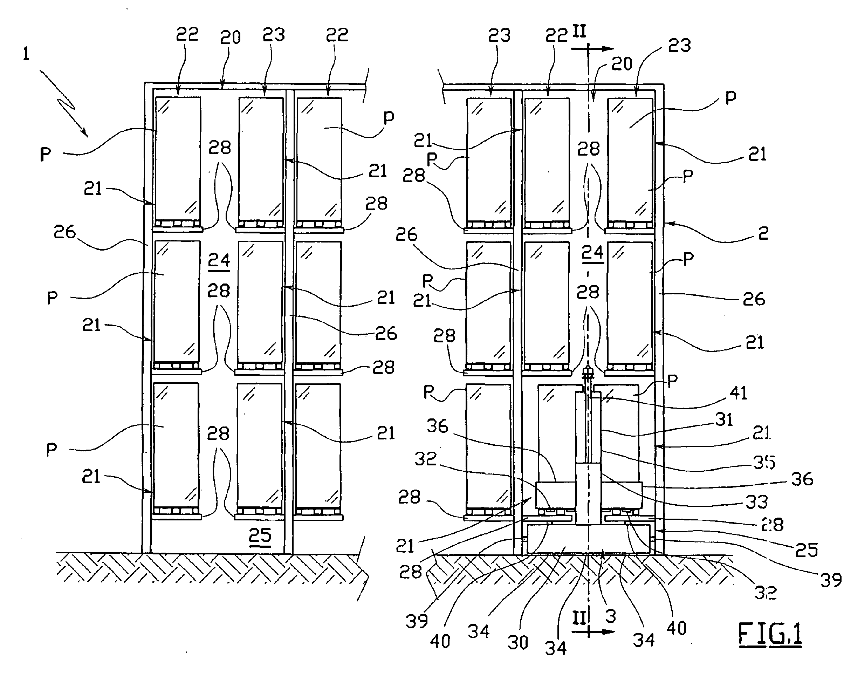

In particular, as illustrated in figure 1, the storage corridor 20 is divided into two series, 22 and 23 respectively, of support compartments 21 stacked above one another.

Such series of compartments, 22 and 23, are separate apart by a narrow intermediate lane 24 that preferably extends for the entire height and the entire longitudinal dimension of the storage corridor 20. Moreover, the series of compartments 22 and 23 arranged at a lower level are slightly away from the floor, so as to define, together with the floor, a lower service corridor 25, i.e. a corridor especially for the lifting means to pass along it, in which the loads are not accumulated. Said corridor 25, has its transversal size and longitudinal extension equal to those of the storage corridor 20, and a substantially smaller height than that of the support compartments 21.

In the illustrated example, the support compartments 21 of each series, 22 and 23, are perfectly interfacing in the transversal direction with the support compartments 21 belonging to the opposite series; however, it should be observed that they could also be staggered.

From the constructive point of view, the storage shelving 2 preferably comprises a plurality of interfacing vertical support walls 26, which extend in height and in the longitudinal direction and have a relatively small transversal dimension, so that a storage corridor 20 is defined between each pair of consecutive walls 26.

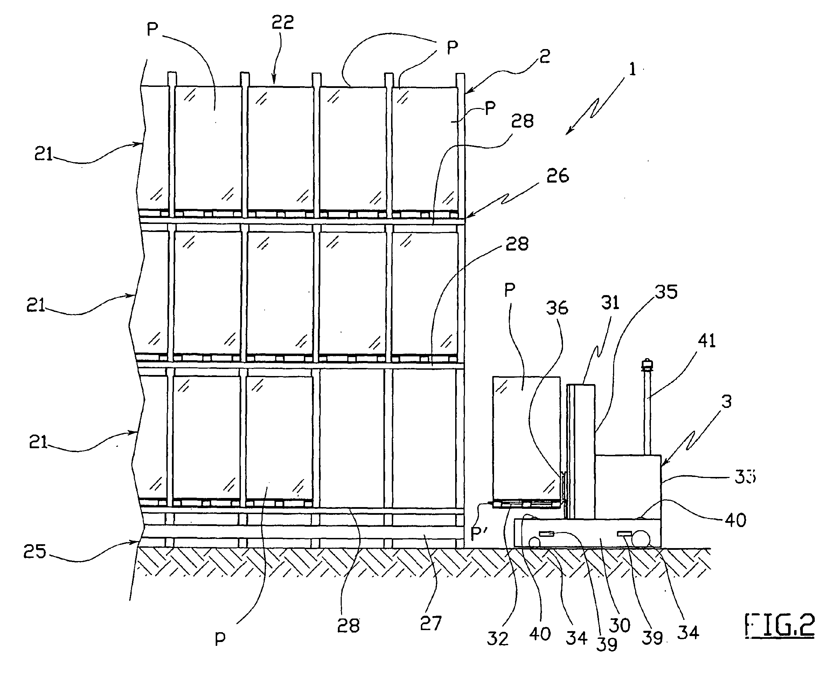

In particular, as illustrated in figure 2, said support walls 26 are reticular walls each formed from a group of uprights and cross-members, and are connected together at the top to increase the stability of the storage shelving 2.

Two corresponding series of horizontal shelves 28 extend, above one another, from the two support walls 26 of each storage corridor 20, substantially for its entire longitudinal dimension, one series for each wall 26; each pair of stacked consecutive shelves 28 defines a support compartment 21; the shelves 28 projecting from one of the two walls 26 define the first series 22 of support compartments 21, whereas the shelves 28 projecting from the other of the two walls 26 define the second series 23 of support compartments 21; these two series 22 and 23 define the storage corridor 20 itself.

In particular, said shelves 28 must project by an amount sufficient to autonomously support a row of loads P in the longitudinal direction.

For this reason, in the example shown, they have a slightly greater transversal dimension than the transversal dimension of each load P; however, it should be highlighted that they could also have a slightly smaller transversal dimension than that of the load P, provided that it is sufficient to support it autonomously.

The shelves 28 belonging to one series are separated from the shelves 28 of the opposite series by an intermediate space not smaller than the transversal dimension of the intermediate lane 24.

The intermediate lane 24 is defined by the ideal corridor that extends for the entire height between the shelves 28 when they have a greater transversal dimension than that of the loads P (as shown in figure 1); whereas it is defined by the ideal corridor that extends for the entire height between the loads P when they project inwards, beyond the free end of the shelves 28.

The lifting means 3 is configured so as to be able to move in the longitudinal direction inside the storage corridor 20.

In particular, it comprises a lower base, 30 for resting on the floor, from which a support means 31 with vertical extension rises centrally, having a substantially greater height than the height of the widened base 30 and a substantially smaller transversal dimension than the transversal dimension of the latter, so as to allow it to pass into the intermediate lane 24, which carries engagement means 32 each suitable for carrying a load P.

The lower base 30 for resting on the floor has a transversal dimension that is as wide as possible, compatibly with the dimensions of the shelving in which it has to be able to slide, so as to make the lifting means sit as stably as possible on the floor, to allow it to remain in stable equilibrium, against oscillations in the vertical plane, whereas it moves freely at the floor only resting on its wheels, possibly with the loads P in position raised from the floor at a substantial height, without other constrictions that help its stability. For such a purpose, the lower base 30, as well as having a suitable longitudinal dimension (which does not pose problems for the sliding of the means 3 inside the shelving) above all has a transversal dimension slightly smaller than the transversal dimension of the storage corridor 20, and a lower maximum height from the floor than the height of the service corridor 25, so as to be able to slide in the longitudinal direction inside it. At the same time, the shelving has said lower service corridor 25, especially for the passage of the lower base 30 of the lifting means along it, which has a somewhat greater transversal dimension with respect to the intermediate lane 24, equal to the entire width of the storage corridor 20.

The engagement means 32 are arranged transversally at opposite sides of the support means 31, and are suitable for being actuated, to raise/lower at least one load P at a time. Preferably, said engagement means 32 are suitable for being actuated independently from each other, so that it is possible to raise/lower many loads P simultaneously and take them to different heights.

Both of the engagement means 32 comprise a support fork, of the type in use in conventional forklifts, to manipulate loads arranged on pallets P', having their own teeth 32' facing in the longitudinal direction, suitable for resting a load P on it.

At this point it should be highlighted that whilst the maximum transversal dimension of the load P carried by each engagement means 32 is generally limited, and is substantially equal to the width of a pallet, its longitudinal dimension can also be indefinite. For example, the fork of each engagement means 32 could be suitable for carrying many palletised loads, provided that they are aligned in the longitudinal direction.

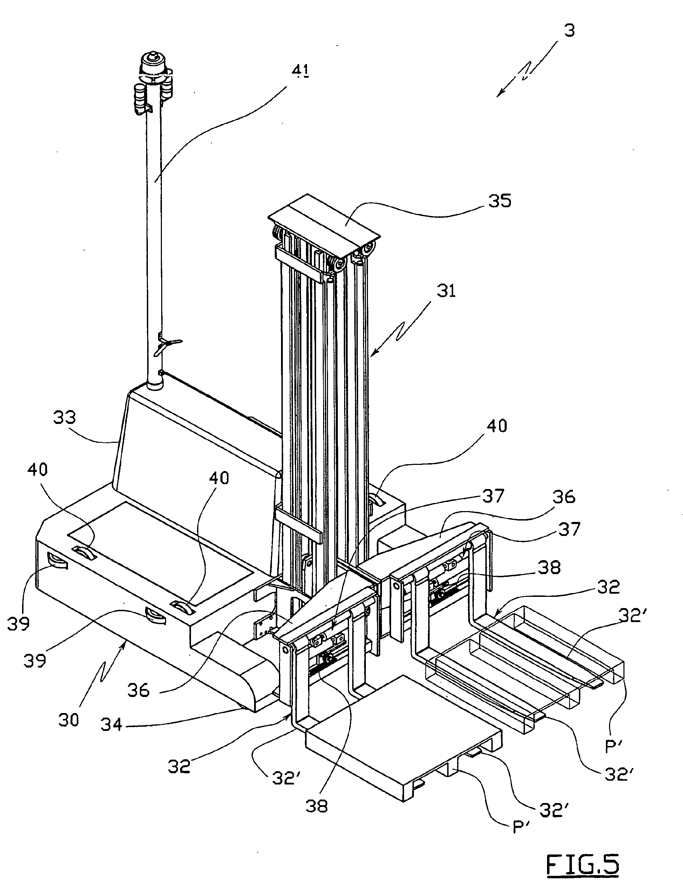

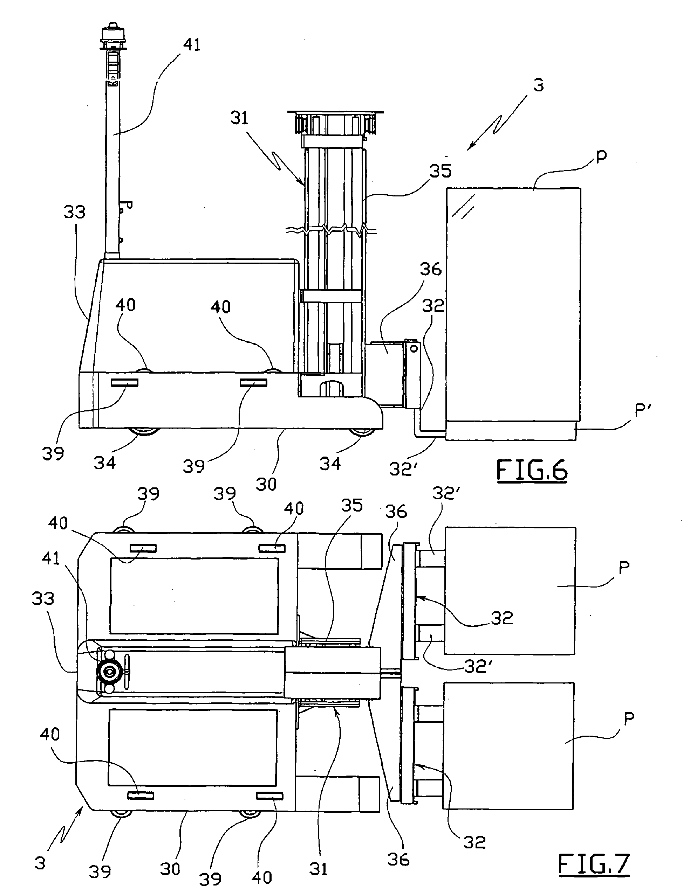

More particularly, as illustrated in figures 5, 6 and 7, the lifting means 3 comprises an outer sheet box formed such as to have the above said widened base 30, which the support means 31 is fixed to, and a narrow raised hood 33 extends in the longitudinal direction aligned to the support means 31, in a rear position relative to the latter, and which has such transversal size to be able to pass in the intermediate lane 24 of the storage corridor 20.

Said outer box is provided with at least three support wheels on the ground and motion wheels 34, of which at least two front idle wheels, located at the maximum distance therebetween, and at least one rear motored steering wheel, and it is adapted for containing - inside the widened base 30 and/or inside the raised hood 33 - the actuation means (electric motors), the driving members of the lifting means 3, and the electrical power accumulators to supply to the movement electric motors of the means on the ground as well as the different members for handling the loads.

The support means 31 comprises a vertical column 35, on which slides at least a sliding trolley 36 in the vertical direction, which carries the engagement means 32. The movement of the sliding trolley 36 along the vertical column 35 is such as to move the forks of the engagement means 32 in any position comprised between a higher position, wherein the same forks can raise the loads P above the support plane defined by the compartments 22 and 23, and a lower position, wherein the forks can slip below the loads resting on the ground, particularly below a pallet P' resting on the ground, which define the base of the load P.

Preferably, as shown in figures 5-7, on the vertical column 35 two different sliding trolleys 36 slide in the vertical direction, which are operated each one independently by a respective chain system associated to the vertical column 35 itself.

Particularly, said vertical column 35 is telescopic to be able to extend in the vertical direction and to allow the sliding trolleys 36 to reach even very notable heights.

Each of the sliding trolleys 36, which are identical to one another and are symmetrically arranged, in the transversal direction relative to the vertical column 35, carries an engagement means 32 to raise /lower a load P.

The lifting means 3, especially through its own support wheels on the ground and moving wheels, of which at least one wheel is a steering wheel and at least one wheel is a motored wheel, can move autonomously on the ground surface (without having to move on rails), even outside the storage shelving 2, even relatively far form it and it can move the loads between any position inside the shelving 2 and an undetermined position, even very far, outside the latter. To this purpose it is important that the lower base 30 has a plan size which is widened enough to give the necessary stability and balance, against turnovers of the means 3 due particularly to the load carried and while the means itself moves outside the shelving 2.

Similarly, the lifting means 3 can load on its own on its forks only, loads (particularly whose lower base is either defined by a pallet P' or is formed as a pallet) resting in different places, like a traditional forklift, particularly loads resting on the ground, without the need for auxiliary means to transfer such loads on the forks themselves or in places specially intended to such transfer.

Briefly, the means 3 can freely move and load and unload the loads like a traditional loading means with forks.

In use, a pair of loads P are loaded onto the lifting means 3 which picks them up from a suitable picking up position, located outside the shelving, for example downstream of a production line, and carries them at the storage shelving 2, at a corridor end 20.

Obviously, on the lifting means 3 even a single load P could be loaded, whereby one of the engagement means 32 could be left free.

After the transport, as illustrated in figures 1 and 2, the lifting means 3 raises the loads P, so that they are opposite to a support compartment 21 belonging to the series 22, and a support compartment 21 belonging to the opposite series 23 respectively.

Particularly, said loads P can be simultaneously lifted and brought in front of the two support compartments 21 located at the same height.

However, as the trolleys 36 which carry the engagement means 32 are independently actuated, they can possibly be brought (whether they carry a load or not) in front of support compartments 21 located even at different heights.

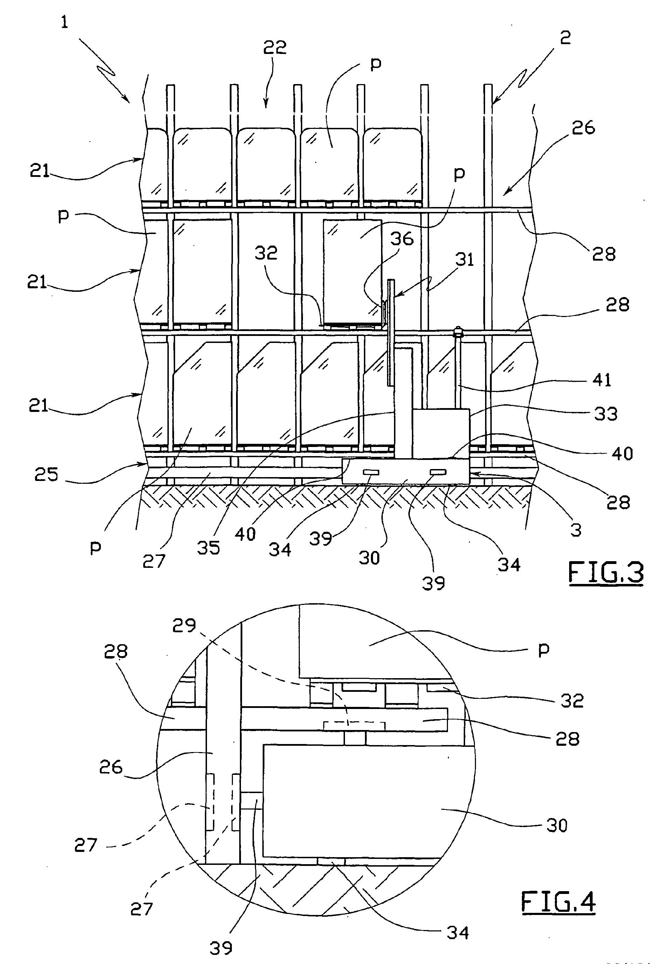

At this point (see for example figure 3), the lifting means 3 moves in the longitudinal direction along the storage corridor 20, whereby the support means 31 and the widened base 30 pass inside the intermediate lane 24 and the service corridor 25 respectively, while the loads P located on the engagement means 32 slide in the longitudinal direction inside the respective support compartments 21.

When the loads P reach a pre-established position in the longitudinal direction inside the support compartments 21, the lifting means 3 stops.

In that position, as illustrated in figure 1, the lifting means 3 releases the loads P on respective support compartments 21, following a slight descending movement of the engagement means 32 to release the load P (particularly, if foreseen, the pallet P') resting on the upper surface of the support compartments 21, in such a way that each load P is distanced relative to the loads P arranged in the opposite series of compartments, 22 or 23, by a sufficient space to leave the inter-mediate lane 24 free. After that, the lifting means 3 moves along the storage corridor 20 in the opposite direction to that in which it has reached that position so as to withdraw its forks from below the load P and to finally exit from the shelving through the same end through which it had entered.

Obviously, inverting the order of the operation steps carried out by the lifting means 3 is the only action needed to pick up the loads P from the storage shelving 2.

According to the invention, the lifting means 3 can move even outside the shelving 2, like a traditional forklift, to move the loads autonomously, without the aid of other means.

Further a single lifting means 3 can serve more corridors 20 of the same shelving or of other separate shelvings. Or, conversely, more lifting means 3 can operate on the same corridor 20, for example one after the other; it is even possible that more lifting means can simultaneously operate along the same corridor 20, for example by entrying and exiting each one through a respective end of the corridor.

In addition, thanks to the particular engagement means 32, both the laying down of the loads on the shelves 28, and their loading from the same shelves 28, as well as the laying down and the picking up of the loads P outside the shelving, is a very easy operation and it does not require particular movement means for the same engagement means.

Further, as the lifting means 3 can move more than a load at a time, the apparatus 1 globally requires a small number of said lifting means 3.

In addition the lifting means 3 can form stacks of loads independent from the shelving, by stacking the loads one above the other in direct contact.

At the same time the invention provides a storage shelving 2 having a very small overall incumberance, comparable to that of the "shelvings with roller conveyor" or "drive-in shelving".

Further, as the lifting means 3 slides along the storage corridor 20, the apparatus 1 according to the invention does not require any further manoeuvring lane located adjacent to the storage shelving 2, as required for example by the "front access shelving".

In addition to that, the apparatus 1 advantageously allows both to load and to unload each support compartment 21 independently form the compartments 21 below it, thus remarkably increasing the possibility of stocking different products and allowing for a greater flexibility in the management of the goods in stock over the known art.

In fact, as illustrated in figure 3, even though said underlying compartments 21 are taken up by loads P, the support means 31 can pass as well along the intermediate lane 24 which remains always free and, therefore, the lifting means 3 can move for the entire longitudinal size of the storage corridor 20, laying down or picking up the loads P at any depth inside the support compartments 21.

Particularly, in order for the intermediate lane 24 to remain always free, when they are released on the respective compartments 21, the loads P carried by the lifting means 3 have to be positioned at a suitable distance the one from the other in the transversal direction, thus releasing them at the same distance the one from the other on the support compartments 21.

Such positioning can be carried out during the picking up step of the loads P, simply by loading the latter on the lifting means 3 already suitably spaced from each other.

However, the invention foresees that the lifting means 3 is adapted for moving apart the loads P in the transversal direction before releasing them on the support compartments 21, and therefore that it is provided with actuation means 37 adapted for moving the engagement means 32 in such transversal direction.

In particular, as shown in figure 3, said actuation means 37 comprise two rack devices 38, each of which is arranged on a respective sliding trolley 36 and is suitable for sliding the support fork carried by it in the transversal direction.

In this way, during the movements of the lifting means 3, the loads P can advantageously be kept close to each other, even in contact with each other, increasing the stability and safety of their movement, and can only be moved apart before they are released onto the support compartments 21.

According to a preferred embodiment of the invention, moreover, the lifting means 3 comprises abutment elements arranged transversally on opposite sides of the support base 30 that, during the movement of the lifting means 3 along the storage corridor 20, are suitable for staying in contact with corresponding guide surfaces arranged on the opposite sides of the storage corridor 20 itself, so as to advantageously stabilize and/or guide the lifting means 3, above all when it moves at a relatively high speed.

In the example shown, the lifting means 3 comprises two pairs of wheels 39 with vertical axis that respectively project from the lateral sides of the widened base 30, and two pairs of wheels 40 horizontal to them that project from the top of the widened base 30 at opposite sides with respect to the raised case 33.

Correspondingly, for every storage corridor 20, the side support walls 26 that define it are each provided, in the lower part, inside the service corridor 25, with a continuous profile 27 that extends for the entire longitudinal dimension of the storage corridor 20; whereas each of the shelves 28 arranged closer to the floor is provided with an analogous continuous profile 29 facing downwards inside the service corridor 25 (as shown in figure 4).

During the movement of the lifting means 3 along the storage corridor 20, as illustrated in the detail of figure 4, whilst the lower base 30 of the means 3 is arranged inside the service corridor 25, each pair of side wheels 39 is suitable for rolling in contact with a respective continuous side profile 27, whereas each pair of upper wheels 40 is suitable for rolling in contact with a continuous profile 29, arranged on the upper surface of the corridor 25.

Finally, it should be observed that in the illustrated example, the lifting means 3 is automatically guided (AGV) and is controlled remotely through signals that are received by the antenna 41 arranged on the raised case 33, so that the movements of the loads P advantageously take place totally automatically.

In this way, the lifting means 3 is able to operate not only inside the storage shelving 2, but in the whole building, for example taking the loads P from the production lines to the warehouse, and from here to dispatch.

Despite this, it is obvious that such lifting means 3 could be controlled and guided in any other known way.

Of course, numerous practical-application modifications can be made to the invention in question, without for this reason departing from the scope of the inventive idea as claimed below.

## Claims

1. Apparatus for stocking bulky loads (P); comprising storing shelving (2) comprising at least one storage corridor (20) with longitudinal horizontal extension, that is divided into two series (22, 23) of support compartments (21) each of which extends like a free corridor for the entire longitudinal dimension, and it is adapted for autonomously supporting a row of loads (P) in the longitudinal direction, where the compartments (21) of each series (22, 23) are stacked above one another; a lifting means (3) adapted for moving in the longitudinal direction along said storage corridor (20), which comprises a support means (31) with vertical extension, having a relatively small transversal size, which carries engagement means (32), arranged transversally on either side with respect to the support means (31), to rise/lower at least one load (P) at a time, said support means (31) being adapted for passing in an intermediate lane (24) that separates the two series (22, 23) of support compartments (21);
said lifting means (3) being adapted for moving the loads (P) to slide in the longitudinal direction inside said support compartments (21), and for releasing them thereon, away from the loads (P) arranged in the opposite series of compartments (21) so as to leave said intermediate lane (24) free,
**characterized in that** said lifting means (3) is movable on the ground surface, even outside the storage shelving (2) through movement wheels (34), of which at least one wheel is a steering wheel and at least one wheel is a motor-driven wheel and its said engagement means (32) comprises two support forks whose teeth are directed in the longitudinal direction, each of which is adapted for carrying a load (P).

2. Apparatus according to claim 1, **characterized in that** said lifting means comprises a widened base (30) for resting on the ground, above which the support means (31) rises, which base has a height which is substantially smaller than the height of the support means (31) and a transversal dimension which is remarkably greater than the transversal dimension of the latter such as to give necessary stability and equilibrium, against rollovers of the means itself.

3. Apparatus according to claim 2, **characterized in that** said series of compartments (22 and 23) located at the lowest level are raised from the ground, so as to define, together with the ground, a service corridor (25), having transversal size and longitudinal extension equal to those of the storage corridor (20), said widened base (30) of the lifting means has transversal size and height form the ground such as to be able to slide in the longitudinal direction inside said service corridor (25) and the support means (31) has a size such as to allow it to slide along the intermediate lane (24).

4. Apparatus according to claim 1, **characterized in that** said lifting means (3) comprises a narrow raised hood (33) extending in the longitudinal direction aligned to the support means (31), and which has such transversal size to be able to pass in the intermediate lane (24) of the storage corridor (20).

5. Apparatus according to claim 1, **characterized in that** the forks of the engagement means (32) are movable along the vertical column (35) of the support means (31), starting from a lower position, wherein the forks can slip beneath the loads resting on the ground, particularly beneath a pallet (P') resting on the ground, which define the load base (P).

6. Apparatus according to claim 1, **characterized in that** said lifting means (3) comprises actuating means (37) adapted for moving the engagement means (32) in the transversal direction, so as to release the loads (P) on the support compartments (21) of one series (22, 23) spaced apart with respect to the loads (P) arranged in the opposite series (22, 23), in order to leave the intermediate lane free (24).

7. Apparatus according to claim 1, **characterized in that** said engagement means (32) is adapted for being actuated independently from each other.

8. Apparatus according to claim 1, **characterized in that** it comprises stabilizing means (27, 29, 39, 40) adapted for stabilizing the lifting means (3) during its movement in the longitudinal direction along the storage corridor (20).

9. Apparatus according to claim 8, **characterized in that** said stabilizing means comprises abutment elements (39, 40) transversally arranged from opposite sides of the lifting means (3), which are adapted for being in contact with guide surfaces (27, 29) located on the opposite sides of the storage corridor (20).

10. Apparatus according to claim 1, **characterized in that** the storage shelving (2) comprises a plurality of vertical support walls (26), facing each other, which extend in height and in the longitudinal direction and have a relatively small transversal size, so that between each pair of consecutive walls (26) is defined a storage corridor (20), said storage corridor (20) being divided in said support compartments (21) by two series of stacked shelves (28), which project from either side of the support wall (26) respectively, inside the storage corridor itself (20) and which extend throughout the entire longitudinal size, where the shelves (28) of each set are separated from the shelves (28) of the other set by an intermediate space which is not smaller than the transversal size of said intermediate lane (24).

## Patentansprüche

1. Vorrichtung zum Lagern sperriger Lasten (P) mit einem Fachbodenlagerregal (2), welches wenigstens einen Lagerkorridor (20) mit horizontaler Längserstreckung, welcher in zwei Reihen (22,23) von Aufnahmefächern (21) geteilt ist, welche sich jeweils wie ein freier Korridor für die gesamte Längsdimension erstrecken, und welcher dafür vorgesehen ist, unabhängig eine Reihe von Lasten (P) in der Längsrichtung aufzunehmen, in welcher die Fächer (21) von jeder Reihe (22,23) übereinander gestapelt sind; und eine Anhebeeinrichtung (3) aufweist, die dafür vorgesehen ist, sich in der Längsrichtung entlang des Lagerkorridors (20) zu bewegen, welche eine Halteeinrichtung (31) mit vertikaler Erstreckung aufweist, die eine relativ kleine transversale Größe aufweist und Eingriffseinrichtungen (32) trägt, welche auf jeder Seite in Bezug auf die Halteeinrichtung (31) transversal angeordnet sind, um wenigstens eine Last (P) gleichzeitig anzuheben/abzusenken, wobei die Halteeinrichtung (31) dafür vorgesehen ist, in eine Zwischenbahn (24) einzuleiten, welche die zwei Reihen (22,23) an Aufnahmefächern (21) trennt;
wobei die Anhebeeinrichtung (3) davor vorgesehen ist, die Lasten (P) so zu bewegen, dass diese in der Längsrichtung innerhalb der Aufnahmefächer (21) gleiten, und um diese dort entfernt von den Lasten (P) loszulassen, welche in den gegenüberliegenden Reihen von Fächern (21) angeordnet sind, um die Zwischenbahn (24) freizulassen;
**dadurch gekennzeichnet, dass** die Anhebeeinrichtung (3) auf der Grundfläche auch außerhalb des Fachbodenlagerregals (2) durch eine Bewegung von Rädern (34) beweglich ist, von welchen wenigstens eines ein Steuerrad und wenigstens eines ein motorgetriebenes Rad ist, wobei ihre Eingriffseinrichtungen (32) zwei Haltegabeln aufweisen, deren Zähne in der Längsrichtung ausgerichtet sind und die jeweils zum Tragen einer Last (P) ausgebildet sind.

2. Vorrichtung nach Anspruch 1,
**dadurch gekennzeichnet, dass** die Anhebeeinrichtung einen erweiterten bzw. breiten Grundkörper (30) zum Ruhen auf dem Boden aufweist, über welchem sich die Halteeinrichtung (31) erhebt, wobei der Grundkörper eine Höhe, welche im wesentlichen kleiner als die Höhe der Halteeinrichtung (31) ist und eine Breitenrichtung aufweist, welche erheblich größer als die Breitenrichtung des letzteren ist, um die erforderliche Stabilität und das Gleichgewicht gegen Überschläge der Einrichtung selbst zu ergeben.

3. Vorrichtung nach Anspruch 2,
**dadurch gekennzeichnet , dass** die Reihe von Fächern (22 und 23), die an der niedrigsten Ebene angeordnet sind, von dem Boden angehoben sind, um zusammen mit dem Boden einen Servicekorridor (25) festzulegen, welcher eine transversale Größe und eine Längserstreckung aufweist, die gleich denjenigen des Lagerkorridors (20) sind, wobei der breite Grundkörper (30) der Anhebeeinrichtung eine transversale Größe und Höhe von dem Boden aufweist, um in der Lage zu sein, in der Längsrichtung innerhalb des Servicekorridors (25) zu gleiten, und wobei die Halteeinrichtung (31) eine derartige Größe aufweist, um es derselben zu ermöglichen, innerhalb der Zwischenbahn (24) zu gleiten.

4. Vorrichtung nach Anspruch 1,
**dadurch gekennzeichnet, dass** die Anhebeeinrichtung (3) eine schmale, erhabene Haube (33) aufweist, welche sich in der zu der Halteeinrichtung (31) ausgerichteten Längsrichtung erstreckt und welche eine solche transversale Größe aufweist, dass sie in der Lage ist, durch die Zwischenbahn (24) des Lagerkorridors (20) zu passieren.

5. Vorrichtung nach Anspruch 1,
**dadurch gekennzeichnet, dass** die Gabeln der Eingriffseinrichtungen (32) entlang der vertikalen Säule (35) der Halteeinrichtung (31) beweglich sind, und zwar beginnend von einer unteren Position, wobei die Gabeln unter die auf dem Boden ruhenden Lasten gleiten können, insbesondere unter eine auf dem Boden ruhende Palette (P'), welche die Basis für die Last (P) festlegt.

6. Vorrichtung nach Anspruch 1,
**dadurch gekennzeichnet, dass** die Anhebeeinrichtung (3) eine Betätigungseinrichtung (37) aufweist, welche dafür vorgesehen ist, die Eingriffseinrichtungen (32) in der Querrichtung zu bewegen, um die Lasten (P) auf den Aufnahmefächern (21) von einer Reihe (22,23) loszulassen, welche in Bezug auf die in den gegenüberliegenden Reihen (22,23) angeordneten Lasten (P) beabstandet sind, um die Zwischenbahn (24) freizulassen.

7. Vorrichtung nach Anspruch 1,
**dadurch gekennzeichnet, dass** die Eingriffseinrichtungen (32) dafür vorgesehen sind, unabhängig voneinander betätigt zu werden.

8. Vorrichtung nach Anspruch 1,
**dadurch gekennzeichnet, dass** sie eine Stabilisierungseinrichtung (27,29,39,40) aufweist, welche dafür vorgesehen ist, die Anhebeeinrichtung (3) während ihrer Bewegung in der Längsrichtung entlang des Lagerkorridors (20) zu stabilisieren.

9. Vorrichtung nach Anspruch 8,
**dadurch gekennzeichnet, dass**
die Stabilisierungseinrichtung Widerlagerelemente (39,40) aufweist, welche von gegenüberliegenden Seiten der Anhebeeinrichtung (3) quer angeordnet sind und welche dafür vorgesehen sind, in Kontakt mit Leitflächen (27,29) zu sein, welche auf den gegenüberliegenden Seiten des Lagerkorridors (20) angeordnet sind.

10. Vorrichtung nach Anspruch 1,
**dadurch gekennzeichnet, dass** das Fachbodenlagerregal (2) eine Vielzahl von vertikalen Tragwänden (26) aufweist, welche einander zugerichtet sind und welche sich in der Höhe und in der Längsrichtung erstrecken und eine relativ geringe transversale Größe aufweisen, so dass zwischen jedem Paar von aufeinanderfolgenden Wänden (26) ein Lagerkorridor (20) festgelegt ist, wobei der Lagerkorridor (20) in die Aufnahmefächer (21) durch zwei Reihen von gestapelten Regalen (28) geteilt ist, welche jeweils von jeder Seite der Tragwand (26) innerhalb des Lagerkorridors (20) selbst hervorstehen und welche sich durch die gesamte Größe in Längsrichtung erstrecken, wo die Regale (28) von jedem Satz von den Regalen (28) von dem anderen Satz durch einen Zwischenraum getrennt sind, welcher nicht kleiner ist als die transversale Größe der Zwischenbahn (24).

## Revendications

1. Appareil pour stocker des charges volumineuses (P), comprenant un rayonnage de stockage (2) comprenant au moins un couloir de stockage (20) doté d'une extension horizontale longitudinale, qui est divisé en deux séries (22, 23) de compartiments de support (21), chacune de celles-ci s'étendant comme un couloir libre dans la dimension longitudinale entière, et qui est conçu pour soutenir de manière autonome une rangée de charges (P) dans la direction longitudinale, où les compartiments (21) de chaque série (22, 23) sont empilés les uns sur les autres ; un moyen de levage (3) conçu pour se déplacer dans la direction longitudinale le long dudit couloir de stockage (20), qui comprend un moyen de support (31) avec une extension verticale, ayant une dimension transversale relativement petite, qui porte un mécanisme d'engagement (32), disposé de manière transversale sur l'un quelconque des côtés par rapport au moyen de support (31), pour lever/abaisser au moins une charge (P) à la fois, ledit moyen de support (31) étant conçu pour passer dans une ligne intermédiaire (24) qui sépare les deux séries (22, 23) de compartiments de support (21) ;
ledit moyen de levage (3) étant conçu pour déplacer les charges (P) pour qu'elles coulissent dans la direction longitudinale à l'intérieur desdits compartiments de support (21), et pour les libérer sur ceux-ci, à l'écart des charges (P) disposées dans la série opposée de compartiments (21) de façon à laisser ladite ligne intermédiaire (24) libre,
**caractérisé en ce que** ledit moyen de levage (3) est déplaçable sur la surface du sol, même à l'extérieur du rayonnage de stockage (2) par l'intermédiaire de roues de mouvement (34), parmi lesquelles au moins une roue est une roue de direction et au moins une roue est une roue motrice et son dit mécanisme d'engagement (32) comprend deux fourches de support dont les dents sont dirigées dans la direction longitudinale, chacune de celles-ci étant conçue pour porter une charge (P).

2. Appareil selon la revendication 1, **caractérisé en ce que** ledit moyen de levage comprend une base élargie (30) pour reposer sur le sol, au-dessus de laquelle le moyen de support (31) s'élève, dont la base a une hauteur qui est sensiblement inférieure à la hauteur du moyen de support (31) et une dimension transversale qui est remarquablement supérieure à la dimension transversale de cette dernière de façon à donner une stabilité et un équilibre nécessaires, pour éviter des basculements du moyen lui-même.

3. Appareil selon la revendication 2, **caractérisé en ce que** lesdites séries de compartiments (22 et 23) situées au niveau le plus bas sont soulevées du sol, de façon à définir, avec le sol, un couloir de service (25), ayant une dimension transversale et une extension longitudinale égales à celles du couloir de stockage (20), ladite base élargie (30) du moyen de levage a une dimension transversale et une hauteur à partir du sol de façon à pouvoir coulisser dans la direction longitudinale à l'intérieur dudit couloir de service (25) et le moyen de support (31) a une dimension lui permettant de coulisser le long de la ligne intermédiaire (24).

4. Appareil selon la revendication 1, **caractérisé en ce que** ledit moyen de levage (3) comprend un capot soulevé étroit (33) s'étendant dans la direction longitudinale dans l'alignement du moyen de support (31), et qui a une dimension transversale telle qu'elle peut passer dans la ligne intermédiaire (24) du couloir de stockage (20).

5. Appareil selon la revendication 1, **caractérisé en ce que** les fourches du mécanisme d'engagement (32) sont déplaçables le long de la colonne verticale (35) du moyen de support (31) à partir d'une position inférieure, dans lequel les fourches peuvent se glisser sous les charges reposant sur le sol, en particulier sous une palette (P') reposant sur le sol, qui définit la base de charge (P).

6. Appareil selon la revendication 1, **caractérisé en ce que** ledit moyen de levage (3) comprend un moyen d'actionnement (37) conçu pour déplacer le mécanisme d'engagement (32) dans la direction transversale, de façon à libérer les charges (P) sur les compartiments de support (21) d'une série (22, 23) à l'écart par rapport aux charges (P) disposées dans la série opposée (22, 23), afin de laisser la ligne intermédiaire (24) libre.

7. Appareil selon la revendication 1, **caractérisé en ce que** lesdits mécanismes d'engagement (32) sont conçus pour être actionnés de manière indépendante les uns par rapport aux autres.

8. Appareil selon la revendication 1, **caractérisé en ce qu'**il comprend des moyens de stabilisation (27, 29, 39, 40) conçus pour stabiliser le moyen (3) de levage au cours de son déplacement dans la direction longitudinale le long du couloir de stockage (20).

9. Appareil selon la revendication 8, **caractérisé en ce que** lesdits moyens de stabilisation comprennent des éléments de butée (39, 40) disposés de manière transversale à partir des côtés opposés du moyen de levage (3), qui sont conçus pour être en contact avec des surfaces de guide (27, 29) situées sur les côtés opposés du couloir de stockage (20).

10. Appareil selon la revendication 1, **caractérisé en ce que** le rayonnage de stockage (2) comprend une pluralité de parois de support verticales (26), les unes en face des autres, qui s'étendent en hauteur et dans la direction longitudinale et ont une dimension transversale relativement petite, de façon qu'entre chaque paire de parois (26) consécutives soit défini un couloir de stockage (20), ledit couloir de stockage (20) étant divisé en lesdits compartiments de support (21) par deux séries de rayons (28) empilés, qui se projettent à partir d'un quelconque côté de la paroi de support (26) respectivement, à l'intérieur du couloir de stockage (20) lui-même et qui s'étendent sur toute la dimension longitudinale, où les rayons (28) de chaque ensemble sont séparés des rayons (28) de l'autre ensemble par un espace intermédiaire qui n'est pas inférieur à la dimension transversale de ladite ligne intermédiaire (24).
